# EUROPÄISCHE PATENTSCHRIFT

(11) **EP 3 305 571 B1**
(45) Veröffentlichungstag und Bekanntmachung des Hinweises auf die Patenterteilung: **24.11.2021**
(21) Anmeldenummer: 17193733.7
(22) Anmeldetag: 28.09.2017
(51) Int. Cl.: B60K 6/12, B60K 6/42, B60K 6/448

(54) **VERFAHREN ZUM BETREIBEN EINER HYBRIDANTRIEBSEINRICHTUNG FÜR EIN KRAFTFAHRZEUG SOWIE ENTSPRECHENDE HYBRIDANTRIEBSEINRICHTUNG**
METHOD FOR OPERATING A HYBRID DRIVE DEVICE FOR A MOTOR VEHICLE AND CORRESPONDING HYBRID DRIVE DEVICE
PROCÉDÉ DE FONCTIONNEMENT D'UN DISPOSITIF D'ENTRAÎNEMENT HYBRIDE POUR VÉHICULE AUTOMOBILE ET DISPOSITIF D'ENTRAÎNEMENT HYBRIDE CORRESPONDANT

(30) Priorität: 10.10.2016 DE 102016219615
(43) Veröffentlichungstag der Anmeldung: 11.04.2018
(73) Patentinhaber: AUDI AG, 85045 Ingolstadt (DE)
(72) Erfinder: Hoffmann, Thomas, 93339 Riedenburg (DE); Jägle, Karl, 85051 Ingolstadt (DE); Störmer, Markus, 92334 Berching (DE)

(56) Entgegenhaltungen:
- EP-A1- 0 552 140
- EP-A2- 2 662 255
- WO-A1-98/47732
- DE-A1-102013 222 999
- DE-T5-112015 000 099
- FR-A1- 2 971 742

## Beschreibung

Die Erfindung betrifft ein Verfahren zum Betreiben einer Hybridantriebseinrichtung für ein Kraftfahrzeug, die ein Antriebsaggregat, eine über ein Umlaufrädergetriebe mit dem Antriebsaggregat gekoppelte elektrische Maschine sowie eine über eine Schaltkupplung mit dem Umlaufrädergetriebe wirkverbindbare Abtriebswelle aufweist, wobei zum Bereitstellen von elektrischer Energie die elektrische Maschine mittels des Antriebsaggregats angetrieben wird, wobei das Umlaufrädergetriebe ein erstes Getriebeelement, ein zweites Getriebeelement und ein drittes Getriebeelement aufweist, wobei das erste Getriebeelement und das zweite Getriebeelement über wenigstens ein an dem dritten Getriebeelement drehbar gelagertes Umlaufrad miteinander gekoppelt sind, wobei das Antriebsaggregat, die elektrische Maschine und die Abtriebswelle mit unterschiedlichen der Getriebeelemente gekoppelt oder koppelbar sind. Die Erfindung betrifft weiterhin eine Hybridantriebseinrichtung für ein Kraftfahrzeug.

Die Hybridantriebseinrichtung dient dem Bereitstellen eines Drehmoments, insbesondere eines auf das Antreiben des Kraftfahrzeugs gerichteten Drehmoments. Das Drehmoment kann insoweit auch als Antriebsdrehmoment bezeichnet werden. Die Hybridantriebseinrichtung verfügt über mehrere Antriebsaggregate, welche unterschiedlichen Typs sind. So sind der Hybridantriebseinrichtung zumindest das Antriebsaggregat sowie ein als elektrische Maschine ausgebildetes weiteres Antriebsaggregat zugeordnet. Das Antriebsaggregat kann grundsätzlich beliebig ausgestaltet sein, bevorzugt liegt es in Form einer Brennkraftmaschine vor. Das Antriebsaggregat ist über das Umlaufrädergetriebe mit der elektrischen Maschine gekoppelt, insbesondere permanent. Hinsichtlich eines Drehmomentflusses zwischen dem Antriebsaggregat und der elektrischen Maschine ist das Umlaufrädergetriebe also zwischen dem Antriebsaggregat und der elektrischen Maschine angeordnet. Das Umlaufrädergetriebe liegt insoweit zwischen dem Antriebsaggregat und der elektrischen Maschine vor.

Hierzu verfügt das Umlaufrädergetriebe über mehrere Getriebeelemente, nämlich beispielsweise ein erstes Getriebeelement, ein zweites Getriebeelement und ein drittes Getriebeelement. Das erste Getriebeelement und das zweite Getriebeelement sind bevorzugt über wenigstens ein an dem dritten Getriebeelement drehbar gelagertes Umlaufrad miteinander gekoppelt. Hierzu kämmt vorzugsweise eine Verzahnung des Umlaufrads sowohl mit einer Verzahnung des ersten Getriebeelements als auch mit einer Verzahnung des zweiten Getriebeelements. Das erste Getriebeelement ist beispielsweise als Hohlrad und das zweite Getriebeelement als Sonnenrad ausgestaltet. Das dritte Getriebeelement liegt insoweit als Umlaufradträger vor. Das Umlaufrädergetriebe kann auch als Planetengetriebe beziehungsweise Planetengetriebesatz bezeichnet werden.

Sowohl das Antriebsaggregat als auch die elektrische Maschine sind über das Umlaufrädergetriebe mit der Abtriebswelle der Hybridantriebseinrichtung koppelbar. An der Abtriebswelle wird das von der Hybridantriebseinrichtung, also das von dem Antriebsaggregat und/oder der elektrischen Maschine, erzeugte Drehmoment beziehungsweise Antriebsdrehmoment bereitgestellt. Die Abtriebswelle ist bevorzugt mit einer Radachse des Kraftfahrzeugs oder zumindest einem Rad des Kraftfahrzeugs wirkverbunden beziehungsweise wirkverbindbar.

Beispielsweise liegt die, insbesondere permanente, Wirkverbindung zwischen der Abtriebswelle und der Radachse und/oder dem wenigstens einen Rad, welches vorzugsweise der Radachse zugeordnet ist, über ein Differentialgetriebe, beispielsweise ein Mittendifferentialgetriebe und/oder ein Achsdifferentialgetriebe, vor. Die Abtriebswelle ist mittels der Schaltkupplung mit dem Umlaufrädergetriebe wirkverbindbar. In einer ersten Schaltstellung der Schaltkupplung ist insoweit die Abtriebswelle von dem Umlaufrädergetriebe entkoppelt, vorzugsweise vollständig, während sie in einer zweiten Schaltstellung der Schaltkupplung mit dem Umlaufrädergetriebe gekoppelt ist, vorzugsweise starr.

Die Kopplung liegt dabei mit einem der Getriebeelemente vor, vorzugsweise einem der Getriebeelemente, welches nicht unmittelbar mit dem Antriebsaggregat oder der elektrischen Maschine gekoppelt ist. Besonders bevorzugt sind das Antriebsaggregat, die elektrische Maschine sowie die Abtriebswelle mit unterschiedlichen Getriebeelementen des Umlaufrädergetriebes gekoppelt beziehungsweise koppelbar. Eines der Getriebeelemente ist insoweit mit dem Antriebsaggregat, ein anderes mit der elektrischen Maschine und ein von diesen verschiedenes Getriebeelement mit der Abtriebswelle gekoppelt beziehungsweise koppelbar.

Weil die Hybridantriebseinrichtung sowohl über das Antriebsaggregat als auch über die elektrische Maschine verfügt, kann bevorzugt das an der Abtriebswelle bereitgestellte Drehmoment entweder mittels des Antriebsaggregats, mittels der elektrischen Maschine oder mittels beiden erzeugt werden. Es kann jedoch auch vorgesehen sein, die elektrische Maschine mithilfe des Antriebsaggregats anzutreiben, um durch generatorischen Betrieb der elektrischen Maschine elektrische Energie bereitzustellen, beispielsweise zur Zwischenspeicherung in einem Energiespeicher. In einem derartigen Betriebszustand der Hybridantriebseinrichtung arbeitet das Umlaufrädergetriebe vorzugsweise als Verteilgetriebe, sodass das von dem Antriebsaggregat erzeugte Drehmoment auf die elektrische Maschine und die Abtriebswelle aufgeteilt wird.

Aus dem Stand der Technik ist beispielsweise die Druckschrift US 2009/0055061 A1 bekannt. Diese betrifft eine Antriebseinrichtung für Kraftfahrzeuge.

Weiterhin ist aus dem Stand der Technik die Druckschrift EP 2 662 255 A2 bekannt. Diese beschreibt ein Verfahren zum Betreiben eines Antriebssystems, umfassend das Empfangen einer maschinellen Fahrgeschwindigkeitsanforderung und das Bestimmen einer Ausgangsgeschwindigkeit eines dem Antriebssystem zugeordneten Variators, um die Fahrgeschwindigkeitsanforderung mit einer bestimmten Energiequellengeschwindigkeit zu erfüllen.

Es ist Aufgabe der Erfindung, ein Verfahren zum Betreiben einer Hybridantriebseinrichtung für ein Kraftfahrzeug vorzuschlagen, welches gegenüber bekannten Verfahren Vorteile aufweist, insbesondere einen flexibleren Betrieb der Hybridantriebseinrichtung ermöglicht.

Dies wird erfindungsgemäß mit einem Verfahren mit den Merkmalen des Anspruchs 1 erreicht. Dabei ist vorgesehen, dass während des Bereitstellens der elektrischen Energie die Abtriebswelle mittels eines Hydraulikaggregats zumindest zeitweise gebremst oder angetrieben wird.

Vorstehend wurde erläutert, dass das Umlaufrädergetriebe während des Bereitstellens der elektrischen Energie bevorzugt als Verteilgetriebe arbeitet, welches das von dem Antriebsaggregat erzeugte Drehmoment auf die elektrische Maschine und die Abtriebswelle aufteilt, zumindest bei geschlossener Schaltkupplung. Dies bedeutet jedoch, dass aus dem Antreiben der elektrischen Maschine mittels des Antriebsaggregats ein Drehmoment an dem mit der Abtriebswelle gekoppelten oder koppelbaren Getriebeelement resultiert, welches sich bei geschlossener Schaltkupplung an der Abtriebswelle abstützt.

Bei geringer Leistung der elektrischen Maschine ist dieses resultierende Drehmoment derart klein, dass keine Beeinträchtigung des Fahrbetriebs des Kraftfahrzeugs auftritt. Ist die Leistung jedoch größer, beispielsweise weil der Energiespeicher rasch geladen werden soll, so ist auch das resultierende Drehmoment größer, sodass eine ungewollte Beschleunigung des Kraftfahrzeugs auftreten kann. Bei herkömmlichen Hybridantriebseinrichtungen kann die elektrische Maschine insoweit beispielsweise bei einer langsamen Fahrt des Kraftfahrzeugs, welche auch als Kriechfahrt bezeichnet werden kann, nur mit geringer Leistung zum Bereitstellen von elektrischer Energie betrieben werden.

Aus diesem Grund ist nun die Abtriebswelle mit dem Hydraulikaggregat gekoppelt. Mithilfe des Hydraulikaggregats kann die Abtriebswelle, insbesondere während des Bereitstellens der elektrischen Energie, zumindest zeitweise, insbesondere durchgehend, gebremst oder angetrieben werden. Das Bremsen der Abtriebswelle mittels des Hydraulikaggregats wird vorzugsweise dann vorgenommen, wenn bei Kriechfahrt die elektrische Maschine mit hoher Leistung zum Bereitstellen der elektrischen Energie verwendet werden soll.

Alternativ kann selbstverständlich die Abtriebswelle mittels des Hydraulikaggregats auch angetrieben werden. Dies wird vorzugsweise ebenfalls während des Betreibens der elektrischen Maschine als Generator mit hoher Leistung durchgeführt. Bevorzugt kann es hierbei vorgesehen sein, die Abtriebswelle von dem Umlaufrädergetriebe zu entkoppeln und allein mittels des Hydraulikaggregats anzutreiben, während die elektrische Maschine über das Umlaufrädergetriebe mittels des Antriebsaggregats angetrieben wird.

Das Antreiben der Abtriebswelle kann selbstverständlich auch bei zumindest teilweise oder vollständig geschlossener Schaltkupplung vorgenommen werden, beispielsweise um einen energieeffizienten Betriebspunkt der Hybridantriebseinrichtung zu erzielen.

Die Schaltkupplung kann Bestandteil eines Gangwechselgetriebes sein oder mit einem solchen in Reihe geschaltet sein. Das Gangwechselgetriebe ermöglicht das Einstellen eines bestimmen Fahrgangs, welcher aus einer Vielzahl von möglichen Fahrgängen ausgewählt wird. Mithilfe des Gangwechselgetriebes können insoweit unterschiedliche Übersetzungen zwischen dem Umlaufrädergetriebe und der Radachse beziehungsweise dem wenigstens einen Rad des Kraftfahrzeugs realisiert sein.

Eine weitere Ausgestaltung der Erfindung sieht vor, dass das Bremsen bei geschlossener Schaltkupplung und/oder das Antreiben bei geöffneter Schaltkupplung erfolgt. Bei geschlossener Schaltkupplung stützt sich, wie bereits vorstehend erläutert, das resultierende Drehmoment an der Abtriebswelle ab. Das Bremsen der Abtriebswelle mittels des Hydraulikaggregats erfolgt nun vorzugsweise derart, dass dieses resultierende Drehmoment ausgeglichen wird. Mithilfe des Hydraulikaggregats wird insoweit ein Gegendrehmoment auf die Abtriebswelle aufgeprägt, welches dem resultierenden Drehmoment entspricht oder zumindest näherungsweise entspricht. Selbstverständlich kann das Gegendrehmoment auch kleiner sein als das resultierende Drehmoment, insbesondere wenn an der Abtriebswelle ein auf das Antreiben des Kraftfahrzeugs gerichtetes Drehmoment bereitgestellt werden soll, das Antriebsdrehmoment also größer als Null ist.

Das Antreiben der Abtriebswelle mittels des Hydraulikaggregats wird dagegen bevorzugt bei geöffneter Schaltkupplung vorgenommen, wenn also die Abtriebswelle von dem Umlaufrädergetriebe und mithin von dem Antriebsaggregat und der elektrischen Maschine entkoppelt ist, also zumindest über das Umlaufrädergetriebe keine Wirkverbindung vorliegt. Auf diese Art und Weise kann die Abtriebswelle völlig unabhängig von der elektrischen Maschine von dem Antriebsaggregat angetrieben werden.

Im Rahmen einer bevorzugten Ausführungsform der Erfindung ist vorgesehen, das beim Bremsen mittels des Hydraulikaggregats gewonnene Energie zum Antreiben der elektrischen Maschine verwendet wird. Wird die Abtriebswelle mithilfe des Hydraulikaggregats gebremst, so wird die kinetische Energie der Abtriebswelle in Hydraulikenergie umgewandelt. Diese wird nachfolgend zum Antreiben der elektrischen Maschine herangezogen. Beispielsweise ist hierzu der elektrischen Maschine ein weiteres Hydraulikaggregat zugeordnet, wobei beim Bremsen der Abtriebswelle das Hydraulikaggregat als Hydraulikpumpe und das weitere Hydraulikaggregat als Hydraulikmotor betrieben wird.

Eine bevorzugte Weiterbildung der Erfindung sieht vor, dass zum Antreiben der Abtriebswelle Hydraulikenergie verwendet wird, die mittels eines von dem Antriebsaggregat angetriebenen weiteren Hydraulikaggregats bereitgestellt wird. Bei einer derartigen Ausgestaltung beziehungsweise Vorgehensweise ist insoweit das weitere Hydraulikaggregat dem Antriebsaggregat zugeordnet. Vorzugsweise ist das weitere Hydraulikaggregat mit dem Antriebsaggregat gekoppelt, insbesondere starr und/oder permanent, oder zumindest mit ihm koppelbar, beispielsweise mittels einer weiteren Schaltkupplung. Zum Antreiben der Abtriebswelle wird das weitere Hydraulikaggregat als Hydraulikpumpe und das Hydraulikaggregat als Hydraulikmotor betrieben.

Im Rahmen einer weiteren Ausgestaltung der Erfindung ist vorgesehen, dass die Abtriebswelle mittels des Hydraulikaggregats in unterschiedlichen Drehrichtungen angetrieben werden kann. Die Hybridantriebseinrichtung beziehungsweise die Fluidverbindung zwischen dem Hydraulikaggregat und dem weiteren Hydraulikaggregat ist also derart ausgestaltet, dass die Drehrichtung des Hydraulikaggregats umkehrbar ist, insbesondere auch bei gleichbleibender Drehrichtung des weiteren Hydraulikaggregats.

Eine Weiterbildung der Erfindung sieht vor, dass das weitere Hydraulikaggregat zum Starten des Antriebsaggregats verwendet wird. Hierzu ist bevorzugt das weitere Hydraulikaggregat unmittelbar mit dem Antriebsaggregat gekoppelt, bevorzugt starr und/oder permanent. Die zum Betreiben des weiteren Hydraulikaggregats benötigte Hydraulikenergie wird beispielsweise einem Hydraulikenergiespeicher, welcher auch als Druckspeicher bezeichnet werden kann, entnommen. In dem Hydraulikenergiespeicher wird Hydraulikfluid unter Druck zwischengespeichert und dem weiteren Hydraulikaggregat zugeführt, wenn das Antriebsaggregat gestartet werden soll.

Schließlich kann im Rahmen einer weiteren Ausführungsform der Erfindung vorgesehen sein, dass mit mittels des Hydraulikaggregats und/oder des weiteren Hydraulikaggregats bereitgestellte Hydraulikenergie wenigstens eine Hydraulikeinrichtung betrieben wird. Die Hydraulikeinrichtung kann grundsätzlich beliebig ausgestaltet sein. Beispielsweise liegt sie in Form eines Schaltventils, beispielsweise für eine Kupplung der Hybridantriebseinrichtung, eines Hydraulikaggregats zum Antreiben eines Nebentriebs der Hybridantriebseinrichtung und/oder eines Hydraulikenergiespeichers vor.

Zum Betreiben der Hydraulikeinrichtung werden insoweit das Hydraulikaggregat, das weitere Hydraulikaggregat oder beide zum Bereitstellen von Hydraulikenergie betrieben. Diese wird der Hydraulikeinrichtung zugeführt. Selbstverständlich kann die Hydraulikeinrichtung auch mit dem Hydraulikenergiespeicher entnommener Hydraulikenergie betrieben werden.

Die Erfindung betrifft weiterhin eine Hybridantriebseinrichtung für ein Kraftfahrzeug, insbesondere zur Durchführung des Verfahrens gemäß den vorstehenden Ausführungen, wobei die Hybridantriebseinrichtung ein Antriebsaggregat, eine über ein Umlaufrädergetriebe mit dem Antriebsaggregat gekoppelte elektrische Maschine sowie eine über eine Schaltkupplung mit dem Umlaufrädergetriebe wirkverbindbare Abtriebswelle aufweist, wobei zum Bereitstellen von elektrischer Energie die elektrische Maschine mittels des Antriebsaggregats antreibbar ist, wobei das Umlaufrädergetriebe ein erstes Getriebeelement, ein zweites Getriebeelement und ein drittes Getriebeelement aufweist, wobei das erste Getriebeelement und das zweite Getriebeelement über wenigstens ein an dem dritten Getriebeelement drehbar gelagertes Umlaufrad miteinander gekoppelt sind, wobei das Antriebsaggregat, die elektrische Maschine und die Abtriebswelle mit unterschiedlichen der Getriebeelemente gekoppelt oder koppelbar sind. Dabei ist vorgesehen, dass die Hybridantriebseinrichtung dazu ausgebildet ist, während des Bereitstellens der elektrischen Energie die Abtriebswelle mittels eines Hydraulikaggregats zumindest zeitweise zu bremsen oder anzutreiben.

Auf die Vorteile einer derartigen Vorgehensweise beziehungsweise einer derartigen Ausgestaltung der Hybridantriebseinrichtung wurde bereits hingewiesen. Sowohl die Hybridantriebseinrichtung als auch das Verfahren zu ihrem Betreiben können gemäß den vorstehenden Ausführungen weitergebildet sein, sodass insoweit auf diese verwiesen wird.

Eine weitere Ausführungsform der Erfindung sieht vor, dass das Umlaufrädergetriebe ein erstes Getriebeelement, ein zweites Getriebeelement und ein drittes Getriebeelement aufweist, wobei das erste Getriebeelement und das zweite Getriebeelement über wenigstens ein an dem dritten Getriebeelement drehbar gelagertes Umlaufrad miteinander gekoppelt sind, wobei das Antriebsaggregat, die elektrische Maschine und die Abtriebswelle jeweils mit einem der Getriebeelemente gekoppelt oder koppelbar sind. Auch auf eine derartige Ausgestaltung des Umlaufrädergetriebes wurde bereits hingewiesen. Das Antriebsaggregat, die elektrische Maschine und die Abtriebswelle sind entsprechend mit unterschiedlichen der Getriebeelemente gekoppelt beziehungsweise koppelbar.

Schließlich kann es im Rahmen einer bevorzugten Ausgestaltung der Erfindung vorgesehen sein, dass das Antriebsaggregat mit dem als Hohlrad ausgebildeten ersten Getriebeelement, die elektrische Maschine mit dem als Sonnenrad ausgebildeten zweiten Getriebeelement und/oder die Abtriebswelle mit dem als Umlaufradträger ausgebildeten dritten Getriebeelement gekoppelt oder koppelbar ist. Das Umlaufrädergetriebe weist insoweit bevorzugt den herkömmlichen Aufbau eines Planetengetriebes auf. Das Antriebsaggregat ist mit dem Hohlrad gekoppelt, insbesondere starr und/oder permanent. Entsprechendes gilt für die Kopplung der elektrischen Maschine mit dem Sonnenrad. Die Abtriebswelle ist dagegen mit dem Umlaufradträger mittels der Schaltkupplung koppelbar. Das bedeutet vorzugsweise, dass die Schaltkupplung einerseits starr und/oder permanent mit dem Umlaufradträger gekoppelt und andererseits starr und/oder permanent mit der Abtriebswelle gekoppelt ist.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer ersten Ausführungsform einer Hybridantriebseinrichtung für ein Kraftfahrzeugs,
- Figur 2: eine schematische Darstellung einer zweiten Ausführungsform der Hybridantriebseinrichtung, sowie
- Figur 3: eine schematische Darstellung der Hybridantriebseinrichtung in einer dritten Ausführungsform.

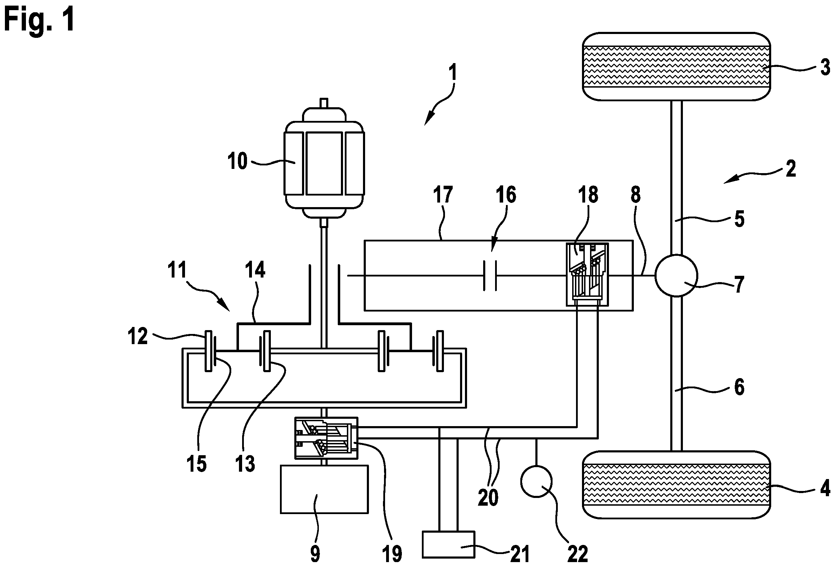

Die Figur 1 zeigt eine schematische Darstellung einer Hybridantriebseinrichtung 1, die einem nicht im Detail dargestellten Kraftfahrzeug zugeordnet ist. Das Kraftfahrzeug verfügt neben der Hybridantriebseinrichtung 1 über eine Radachse 2, an welcher Räder 3 und 4 des Kraftfahrzeugs angeordnet sind. Die Radachse 2 weist zwei Teilachsen 5 und 6 auf, welche über ein Achsdifferentialgetriebe 7 miteinander gekoppelt sind. Jeder der Teilachsen 5 und 6 ist eines der Räder 3 und 4 zugeordnet. Das entsprechende Rad 3 beziehungsweise 4 ist dabei an der jeweiligen Teilachse 5 beziehungsweise 6 vorzugsweise drehfest befestigt. Über das Achsdifferentialgetriebe 7 sind die Teilachsen 5 und 6 mit einer Abtriebswelle 8 der Hybridantriebseinrichtung 1 gekoppelt. Die Abtriebswelle 8 ist dabei vorzugsweise drehfest mit einer Eingangswelle hier nicht dargestellt) des Achsdifferentialgetriebes 7 gekoppelt, während die Teilachsen 5 und 6 mit Ausgangswellen des Achsdifferentialgetriebes 7 drehfest gekoppelt sind beziehungsweise von diesem gebildet sind.

Die Hybridantriebseinrichtung 1 verfügt zusätzlich zu der Abtriebswelle 8 über ein Antriebsaggregat 9 sowie über eine elektrische Maschine 10. Diese sind über ein Umlaufrädergetriebe 11 miteinander gekoppelt, insbesondere permanent. Das Umlaufrädergetriebe 11 weist hierbei ein erstes Getriebeelement 12, ein zweites Getriebeelement 13 sowie ein drittes Getriebeelement 14 auf. Das erste Getriebeelement 12 ist als Hohlrad, das zweite Getriebeelement 13 als Sonnenrad und das dritte Getriebeelement 14 als Umlaufradträger ausgebildet. Entsprechend ist an dem dritten Getriebeelement 14 wenigstens ein Umlaufrad 15 drehbar gelagert, welches eine Verzahnung aufweist, die einerseits mit einer Verzahnung des ersten Getriebeelements 12 und andererseits mit einer Verzahnung des zweiten Getriebeelements 13 kämmt. Über das Umlaufrad 15 sind insoweit die Getriebeelemente 12 und 13 permanent miteinander gekoppelt.

Beispielsweise ist nun das Antriebsaggregat 9 mit dem ersten Getriebeelement 12 und die elektrische Maschine 10 mit dem zweiten Getriebeelement 13 gekoppelt, vorzugsweise jeweils starr und/oder permanent. Das dritte Getriebeelement 14 ist dagegen über eine Schaltkupplung 16 mit der Abtriebswelle 8 koppelbar. Dies ist hier lediglich schematisch dargestellt. Die Schaltkupplung 16 kann beispielsweise Bestandteil eines Gangwechselgetriebes 17 oder separat zu einem solchen ausgestaltet sein. In letzterem Fall liegt die Schaltkupplung 16 beispielsweise als Anfahrkupplung der Hybridantriebseinrichtung 1 vor.

Mit der Abtriebswelle 8 ist ein Hydraulikaggregat 18 gekoppelt oder zumindest koppelbar. Das Hydraulikaggregat 18 ist hydraulisch mit einem weiteren Hydraulikaggregat 19 verbunden, welches zumindest zeitweise mit dem Antriebsaggregat 9 gekoppelt beziehungsweise mit diesem koppelbar ist. Das Hydraulikaggregat 18 kann jedoch auch starr und/oder permanent mit der Abtriebswelle 8 und/oder das Hydraulikaggregat 19 starr und/oder permanent mit dem Antriebsaggregat 9 gekoppelt sein. Die hydraulische Verbindung zwischen den Hydraulikaggregaten 18 und 19 ist beispielsweise mittels einer oder mehreren Hydraulikleitungen 20 hergestellt. An die Hydraulikleitung 20 können zudem eine Hydraulikeinrichtung 21 und/oder ein Hydraulikenergiespeicher 22 angeschlossen sein. Sowohl die Hydraulikeinrichtung 21 als auch der Hydraulikenergiespeicher 22 sind jedoch rein optional, können also jeweils wahlweise vorgesehen oder nicht vorgesehen sein.

In wenigstens einer Betriebsart der Hybridantriebseinrichtung 1 soll die elektrische Maschine 10 mittels des Antriebsaggregats 9 angetrieben werden, um elektrische Energie bereitzustellen. Diese elektrische Energie kann beispielsweise in einem Energiespeicher der Hybridantriebseinrichtung 1 zwischengespeichert werden. Während des Bereitstellens der elektrischen Energie mittels der elektrischen Maschine ist es nun vorgesehen, die Abtriebswelle 8 mittels des Hydraulikaggregats 18 anzutreiben, während gleichzeitig die Schaltkupplung 16 geöffnet, insbesondere vollständig geöffnet ist. Das bedeutet, dass die Abtriebswelle 8 lediglich hydraulisch, nicht jedoch mechanisch über die Schaltkupplung 16 mit dem Antriebsaggregat 9 in Wirkverbindung steht. Hierzu wird das weitere Hydraulikaggregat 19 als Hydraulikpumpe und das Hydraulikaggregat 18 als Hydraulikmotor betrieben. Zudem wird das Antriebsaggregat 9 derart angesteuert, dass es ein Drehmoment bereitstellt, welches zum einen für das Antreiben des Hydraulikaggregats 18 und zum anderen für das Antreiben der elektrischen Maschine 10 ausreicht.

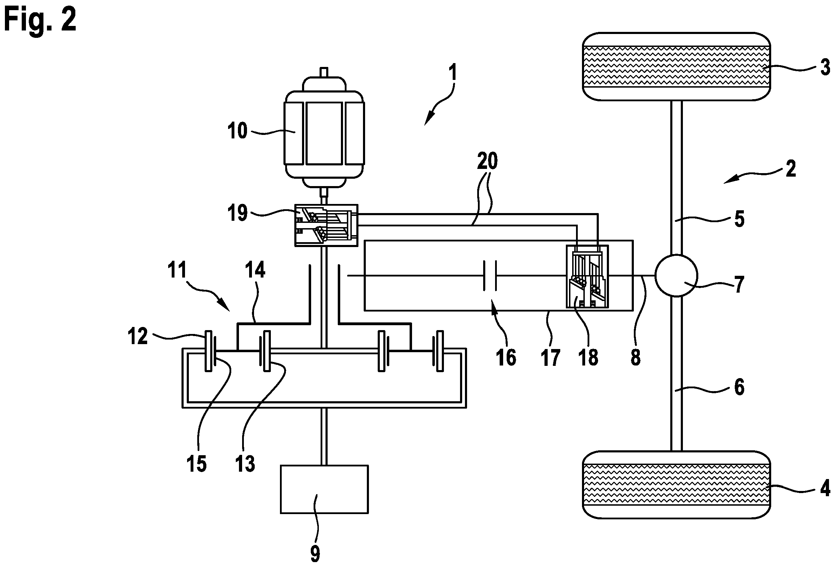

Die Figur 2 zeigt eine zweite Ausführungsform der Hybridantriebseinrichtung 1. Grundsätzlich wird auf die vorstehenden Ausführungen verwiesen und nachfolgend lediglich auf die Unterschiede hingewiesen. Diese liegen lediglich darin, dass das weitere Hydraulikaggregat 19 nun mit der elektrischen Maschine 10 anstelle des Antriebsaggregats 9 gekoppelt ist. Bei einer derartigen Ausgestaltung kann es während des Bereitstellens der elektrischen Energie mittels der elektrischen Maschine 10 vorgesehen sein, die Abtriebswelle 8 über die Schaltkupplung 16 mit dem Antriebsaggregat 9 anzutreiben. Um eine ausreichende Leistungsverzweigung des Umlaufrädergetriebes 11 in Richtung der elektrischen Maschine 10 zu erzielen, soll nun jedoch die Abtriebswelle 8 mittels des Hydraulikaggregats 18 zumindest zeitweise gebremst werden. Die während des Bremsens anfallende Hydraulikenergie kann zusätzlich zum Antreiben der elektrischen Maschine 10 mittels des Hydraulikaggregats 19 herangezogen werden. Bei einer derartigen Ausgestaltung arbeitet das Hydraulikaggregat 18 als Hydraulikpumpe und das Hydraulikaggregat 19 als Hydraulikmotor.

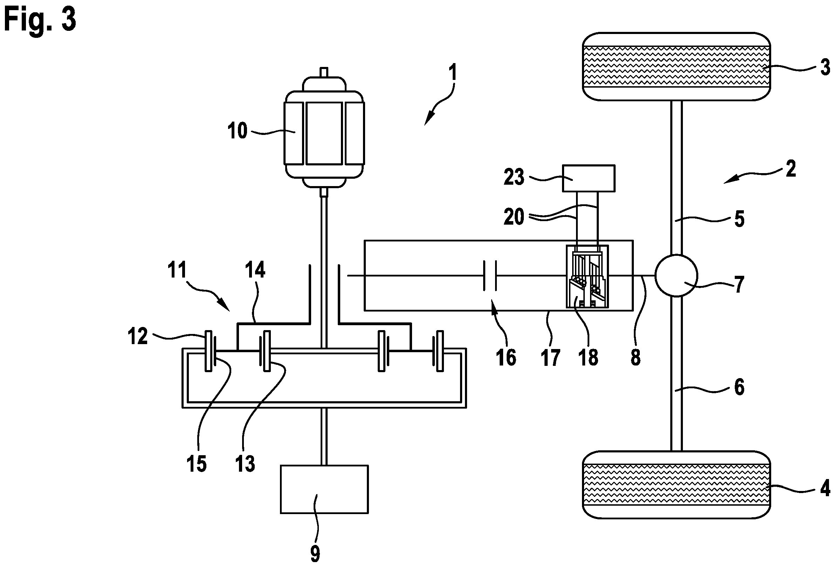

Die Figur 3 zeigt eine dritte Ausführungsform der Hybridantriebseinrichtung 1. Wiederum wird auf die vorstehenden Ausführungen, insbesondere zu der ersten Ausführungsform, verwiesen. Nachfolgend werden die Unterschiede zu dieser erläutert. Diese liegen darin, dass das weitere Hydraulikaggregat 19 nicht vorhanden ist, während das Hydraulikaggregat 18 auf die beschriebene Art und Weise mit der Abtriebswelle 8 gekoppelt ist. Mit einer derartigen Ausgestaltung der Hybridantriebseinrichtung 1 ist es möglich, analog zu der vorstehend beschriebenen zweiten Ausführungsform, während des Bereitstellens der elektrischen Energie mittels der elektrischen Maschine 10 die Abtriebswelle unter Verwendung des Hydraulikaggregats 18 zumindest zeitweise zu bremsen, während die Abtriebswelle 8 gleichzeitig über die geschlossene Schaltkupplung 16 und das Umlaufrädergetriebe 11 von dem Antriebsaggregat 9 angetrieben wird.

Das Hydraulikaggregat 18 arbeitet insoweit als Hydraulikbremse oder als Hydraulikpumpe. In letzterem Fall kann die mittels des Hydraulikaggregats 18 bereitgestellte Hydraulikenergie zum Betreiben der Hydraulikeinrichtung 21 herangezogen werden. Im Falle der Hydraulikbremse ist Leistung der Hydraulikbremse beispielsweise mittels eines Drosselventils 23 einstellbar, insbesondere steuerbar und/oder regelbar. In beiden Fällen kann das Hydraulikaggregat 18 fluidtechnisch an einen Wärmetauscher angeschlossen sein und über diesen in einen Wärmekreislauf eingebunden sein. Der Wärmekreislauf dient beispielsweise der Temperierung eines Fahrgastraums des Kraftfahrzeugs.

Selbstverständlich ist es bei der hier dargestellten Ausführungsform mit dem Hydraulikaggregat 18 auch möglich, dieses wahlweise beziehungsweise wechselweise als Hydraulikpumpe und als Hydraulikmotor zu betreiben. Beispielsweise kann durch ein Betreiben des Hydraulikaggregats 18 als Hydraulikpumpe ein Hydraulikenergiespeicher beladen werden und die in diesem zwischengespeicherte Hydraulikenergie nachfolgend zum Betreiben des dann als Hydraulikmotor arbeitenden Hydraulikaggregats 18 herangezogen werden, beispielsweise zur kurzfristigen Bereitstellung eines höheren Antriebsdrehmoments an der Abtriebswelle 8.

Insgesamt ermöglicht die vorstehend beschriebene Hybridantriebseinrichtung 1 gemäß den drei Ausführungsformen einen äußerst flexiblen Betrieb, insbesondere auch ein Bereitstellen von elektrischer Energie durch generatorisches Betreiben der elektrischen Maschine 10 bei langsamer Fahrt des Kraftfahrzeugs.

## Patentansprüche

1. Verfahren zum Betreiben einer Hybridantriebseinrichtung (1) für ein Kraftfahrzeug, die ein Antriebsaggregat (9), eine über ein Umlaufrädergetriebe (11) mit dem Antriebsaggregat (9) gekoppelte elektrische Maschine (10) sowie eine über eine Schaltkupplung (16) mit dem Umlaufrädergetriebe (11) wirkverbindbare Abtriebswelle (8) aufweist, wobei zum Bereitstellen von elektrischer Energie die elektrische Maschine (10) mittels des Antriebsaggregats (9) angetrieben wird, wobei das Umlaufrädergetriebe (11) ein erstes Getriebeelement (12), ein zweites Getriebeelement (13) und ein drittes Getriebeelement (14) aufweist, wobei das erste Getriebeelement (12) und das zweite Getriebeelement (13) über wenigstens ein an dem dritten Getriebeelement (14) drehbar gelagertes Umlaufrad (15) miteinander gekoppelt sind, wobei das Antriebsaggregat (9), die elektrische Maschine (10) und die Abtriebswelle (8) mit unterschiedlichen der Getriebeelemente (12,13,14) gekoppelt oder koppelbar sind, **dadurch gekennzeichnet, dass** während des Bereitstellens der elektrischen Energie die Abtriebswelle (8) mittels eines Hydraulikaggregats (18) zumindest zeitweise gebremst oder angetrieben wird.

2. Verfahren nach Anspruch 1, **dadurch gekennzeichnet, dass** das Bremsen bei geschlossener Schaltkupplung (16) und/oder das Antreiben bei geöffneter Schaltkupplung (16) erfolgt.

3. Verfahren nach einem der vorhergehenden Ansprüche, **dadurch gekennzeichnet, dass** beim Bremsen mittels des Hydraulikaggregats (18) gewonnene Energie zum Antreiben der elektrischen Maschine (10) verwendet wird.

4. Verfahren nach einem der vorhergehenden Ansprüche, **dadurch gekennzeichnet, dass** zum Antreiben der Abtriebswelle (8) Hydraulikenergie verwendet wird, die mittels eines von dem Antriebsaggregat (9) angetriebenen weiteren Hydraulikaggregats (19) bereitgestellt wird.

5. Verfahren nach einem der vorhergehenden Ansprüche, **dadurch gekennzeichnet, dass** die Abtriebswelle (8) mittels des Hydraulikaggregats (18) in unterschiedlichen Drehrichtungen angetrieben werden kann.

6. Verfahren nach einem der vorhergehenden Ansprüche, **dadurch gekennzeichnet, dass** das weitere Hydraulikaggregat (19) zum Starten des Antriebsaggregats (9) verwendet wird.

7. Verfahren nach einem der vorhergehenden Ansprüche, **dadurch gekennzeichnet, dass** mit mittels des Hydraulikaggregats (18) und/oder des weiteren Hydraulikaggregats (19) bereitgestellter Hydraulikenergie wenigstens eine Hydraulikeinrichtung (21) betrieben wird.

8. Hybridantriebseinrichtung (1) für ein Kraftfahrzeug zur Durchführung des Verfahrens nach einem oder mehreren der vorhergehenden Ansprüche, wobei die Hybridantriebseinrichtung (1) ein Antriebsaggregat (9), eine über ein Umlaufrädergetriebe (11) mit dem Antriebsaggregat (9) gekoppelte elektrische Maschine (10) sowie eine über eine Schaltkupplung (16) mit dem Umlaufrädergetriebe (11) wirkverbindbare Abtriebswelle (8) aufweist, wobei zum Bereitstellen von elektrischer Energie die elektrische Maschine (10) mittels des Antriebsaggregats (9) antreibbar ist, wobei das Umlaufrädergetriebe (11) ein erstes Getriebeelement (12), ein zweites Getriebeelement (13) und ein drittes Getriebeelement (14) aufweist, wobei das erste Getriebeelement (12) und das zweite Getriebeelement (13) über wenigstens ein an dem dritten Getriebeelement (14) drehbar gelagertes Umlaufrad (15) miteinander gekoppelt sind, wobei das Antriebsaggregat (9), die elektrische Maschine (10) und die Abtriebswelle (8) mit unterschiedlichen der Getriebeelemente (12,13,14) gekoppelt oder koppelbar sind, **dadurch gekennzeichnet, dass** die Hybridantriebseinrichtung (1) dazu ausgebildet ist, während des Bereitstellens der elektrischen Energie die Abtriebswelle (8) mittels eines Hydraulikaggregats (18) zumindest zeitweise zu bremsen oder anzutreiben.

9. Hybridantriebseinrichtung nach Anspruch 8, **dadurch gekennzeichnet, dass** das Antriebsaggregat (9) mit dem als Hohlrad ausgebildeten ersten Getriebeelement (12), die elektrische Maschine (10) mit dem als Sonnenrad ausgebildeten zweiten Getriebeelement (13) und/oder die Abtriebswelle (8) mit dem als Umlaufradträger ausgebildeten dritten Getriebeelement (14) gekoppelt oder koppelbar ist.

## Claims

1. Method for operating a hybrid drive device (1) for a motor vehicle, which has a drive unit (9), an electric machine (10) coupled to the drive unit (9) via an epicyclic gear transmission (11) and an output shaft (8) which can be operatively connected to the epicyclic gear transmission (11) via a clutch (16), wherein for providing electric power the electric machine (10) is driven via the drive unit (9), wherein the epicyclic gear transmission (11) has a first transmission element (12), a second transmission element (13) and a third transmission element (14), wherein the first transmission element (12) and the second transmission element (13) are coupled to one another via at least one planet gear (15) rotatably mounted on the third transmission element (14), wherein the drive unit (9), the electric machine (10) and the output shaft (8) are coupled or can be coupled to different transmission elements (12, 13, 14), **characterised in that** during the provision of electric power, the output shaft (8) is braked or driven at least sometimes via a hydraulic unit (18).

2. Method according to claim 1, **characterised in that** the braking is performed with a closed clutch (16) and/or driving is performed with an opened clutch (16).

3. Method according to any of the preceding claims, **characterised in that** on braking energy obtained via the hydraulic unit (18) is used for driving the electric machine (10).

4. Method according to any of the preceding claims, **characterised in that** hydraulic energy is used for driving the output shaft (8), the energy being provided via a further hydraulic unit (19) driven by the drive unit (9).

5. Method according to any of the preceding claims, **characterised in that** the output shaft (8) can be driven via the hydraulic unit (18) in different directions of rotation.

6. Method according to any of the preceding claims, **characterised in that** the further hydraulic unit (19) is used for starting the drive unit (9).

7. Method according to any of the preceding claims, **characterised in that** at least one hydraulic device (21) is operated by hydraulic energy provided via the hydraulic unit (18) and/or the further hydraulic unit (19).

8. Hybrid drive device (1) for a motor vehicle for carrying out the method according to one or more of the preceding claims, wherein the hybrid drive device (1) has a drive unit (9), an electric machine (10) coupled to the drive unit (9) via an epicyclic gear transmission (11) and an output shaft (8) which can be operatively connected to the epicyclic gear transmission (11) via a clutch (16), wherein for providing electric power the electric machine (10) can be driven via the drive unit (9), wherein the epicyclic gear transmission (11) has a first transmission element (12), a second transmission element (13) and a third transmission element (14), wherein the first transmission element (12) and the second transmission element (13) are coupled to one another via at least one planet gear (15) rotatably mounted on the third transmission element (14), wherein the drive unit (9), the electric machine (10) and the output shaft (8) are coupled or can be coupled to different transmission elements (12, 13, 14), **characterised in that** the hybrid drive device (1) is configured to brake or drive the output shaft (8) at least sometimes via a hydraulic unit (18) during the provision of electric power.

9. Hybrid drive device according to claim 8, **characterised in that** the drive unit (9) is coupled or can be coupled to the first transmission element (12) configured as a ring gear, the electric machine (10) is coupled or can be coupled to the second transmission element (13) configured as a sun gear and/or the output shaft (8) is coupled or can be coupled to the third transmission element (14) configured as an epicyclic gear carrier.

## Revendications

1. Procédé de fonctionnement d'un dispositif d'entraînement hybride (1) pour un véhicule automobile qui présente un groupe d'entraînement (9), une machine électrique (10) couplée par un engrenage de roues planétaires (11) au groupe d'entraînement (9) ainsi qu'un arbre de sortie (8) pouvant être relié activement par le biais d'un couplage de commutation (16) à l'engrenage de roues planétaires (11), dans lequel pour la fourniture d'énergie électrique la machine électrique (10) est entraînée au moyen du groupe d'entraînement (9), dans lequel l'engrenage de roues planétaires (11) présente un premier élément d'engrenage (12), un deuxième élément d'engrenage (13) et un troisième élément d'engrenage (14), dans lequel le premier élément d'engrenage (12) et le deuxième élément d'engrenage (13) sont couplés entre eux par au moins une roue planétaire (15) logée de manière rotative au niveau du troisième élément d'engrenage (14), dans lequel le groupe d'entraînement (9), la machine électrique (10) et l'arbre de sortie (8) sont ou peuvent être couplés à des différents des éléments d'engrenage (12, 13, 14), **caractérisé en ce que** pendant la fourniture de l'énergie électrique l'arbre de sortie (8) est freiné ou entraîné au moins temporairement au moyen d'un groupe hydraulique (18).

2. Procédé selon la revendication 1, **caractérisé en ce que** le freinage est effectué en cas de couplage de commutation (16) fermé et/ou l'entraînement est effectué en cas de couplage de commutation (16) ouvert.

3. Procédé selon l'une quelconque des revendications précédentes, **caractérisé en ce que** de l'énergie obtenue lors du freinage au moyen du groupe hydraulique (18) est utilisée pour l'entraînement de la machine électrique (10).

4. Procédé selon l'une quelconque des revendications précédentes, **caractérisé en ce que** pour l'entraînement de l'arbre de sortie (8) de l'énergie hydraulique est utilisée, laquelle est fournie au moyen d'un autre groupe hydraulique (19) entraîné par le groupe d'entraînement (9).

5. Procédé selon l'une quelconque des revendications précédentes, **caractérisé en ce que** l'arbre de sortie (8) peut être entraîné au moyen du groupe hydraulique (18) dans différents sens de rotation.

6. Procédé selon l'une quelconque des revendications précédentes, **caractérisé en ce que** l'autre groupe hydraulique (19) est utilisé pour le démarrage du groupe d'entraînement (9).

7. Procédé selon l'une quelconque des revendications précédentes, **caractérisé en ce qu'**au moins un dispositif hydraulique (21) est actionné avec de l'énergie hydraulique fournie au moyen du groupe hydraulique (18) et/ou de l'autre groupe hydraulique (19).

8. Dispositif d'entraînement hybride (1) pour un véhicule automobile pour la réalisation du procédé selon l'une ou plusieurs quelconques des revendications précédentes, dans lequel le dispositif d'entraînement hybride (1) présente un groupe d'entraînement (9), une machine électrique (10) couplée par un engrenage de roues planétaires (11) au groupe d'entraînement (9) ainsi qu'un arbre de sortie (8) reliable activement par un couplage de commutation (16) à l'engrenage de roues planétaires (11), dans lequel pour la fourniture d'énergie électrique la machine électrique (10) peut être entraînée au moyen du groupe d'entraînement (9), dans lequel l'engrenage de roues planétaires (11) présente un premier élément d'engrenage (12), un deuxième élément d'engrenage (13) et un troisième élément d'engrenage (14), dans lequel le premier élément d'engrenage (12) et le deuxième élément d'engrenage (13) sont couplés entre eux par au moins une roue planétaire (15) logée de manière rotative au niveau du troisième élément d'engrenage (14), dans lequel le groupe d'entraînement (9), la machine électrique (10) et l'arbre de sortie (8) sont ou peuvent être couplés à des différents des éléments d'engrenage (12, 13, 14), **caractérisé en ce que** le dispositif d'entraînement hybride (1) est réalisé afin de freiner ou d'entraîner au moins temporairement pendant la fourniture de l'énergie électrique l'arbre de sortie (8) au moyen d'un groupe hydraulique (18).

9. Dispositif d'entraînement hybride selon la revendication 8, **caractérisé en ce que** le groupe d'entraînement (9) est ou peut être couplé au premier élément d'engrenage (12) réalisé comme roue creuse, la machine électrique (10) au deuxième élément d'engrenage (13) réalisé comme roue solaire et/ou l'arbre de sortie (8) est ou peut être couplé au troisième élément d'engrenage (14) réalisé comme support de roue planétaire.
